# NOUVEAU FASCICULE DE BREVET EUROPEEN

(11) **EP 0 312 439 B2**
(45) Date de publication et mention de la décision concernant l'opposition: **01.02.1995**
(45) Mention de la délivrance du brevet: 12.06.1991
(21) Numéro de dépôt: 88402560.2
(22) Date de dépôt: 11.10.1988
(51) Int. Cl.: C03B 23/02, C03B 23/03, C03B 27/00, C03B 27/04, C03B 35/20, C03B 40/00

(54) **Amélioration de la trempe du verre**
Verbesserung zum Härten von Glas
Improvements in or relating to tempering glass

(30) Priorité: 14.10.1987 FR 8714185
(43) Date de publication de la demande: 19.04.1989
(73) Titulaire: SAINT-GOBAIN VITRAGE INTERNATIONAL, 92400 Courbevoie (FR)
(72) Inventeur: D'Iribarne, Benoit, D-5100 Aachen (DE); Vanaschen, Luc, B-4700 Eupen (BE); Kuster, Hans-Werner, D-5100 Aachen (DE)
(74) Mandataire: Leconte, Jean-Gérard

(56) Documents cités:
- FR-A- 1 459 549
- GB-A- 1 158 360
- GB-A- 2 188 045
- US-A- 3 586 492
- US-A- 3 694 182
- US-A- 3 741 743
- US-A- 3 973 943
- US-A- 4 361 433
- US-A- 4 556 408
- US-A- 4 678 495

## Description

La présente invention concerne essentiellement la trempe à l'air, éventuellement associée au bombage, de plaques de verre et plus spécialement un revêtement pour un cadre, destiné à porter les plaques de verre pendant leur trempe, leur bombage et leur transport éventuellement.

Une des techniques connues de bombage et de trempe à l'air de plaques de verre met en oeuvre un cadre, à profil courbe, ouvert en son centre, sur lequel reposent les plaques de verre pour être bombées, trempées, transportées, etc... De tels cadres sont par exemple décrits dans la demande de brevet publié en FRANCE sous le n° FR-A-2 572 388.

Une plaque de verre chauffée à sa température de bombage et de trempe est déposée sur un tel cadre et elle peut y subir un bombage par simple effet de la gravité et/ou par pressage, elle peut ensuite être transportée toujours en appui sur ce cadre, notamment jusqu'au poste de trempe où elle est soumise à un soufflage intense. On peut employer un cadre unique passant d'un poste de travail à l'autre, mais on peut aussi employer une pluralité de cadres intervenant chacun à un poste bien défini, les plaques de verre changeant donc de moyen de support lorsqu'elles passent d'un poste à l'autre. Cette pluralité de cadres peut dans certains cas n'être exigée que par une organisation particulière de tâches à accomplir, mais bien souvent, elle est aussi rendue nécessaire par l'incapacité d'un cadre unique à remplir tous les rôles : cadre de bombage, cadre de trempe, cadre de transport, etc... En effet, pour tenir tous ces rôles le cadre doit posséder de multiples qualités difficilement compatibles : il doit tenir aux hautes températures, posséder une bonne résistance mécanique pour pouvoir résister à des opérations de bombage notamment par pressage, il doit aussi posséder une mauvaise conduction thermique pour ne pas marquer thermiquement le verre, voire même le faire éclater lorsque verte et cadre sont à des températures trop différentes les unes des autres, il doit en outre posséder une grande porosité à l'air pour ne pas constituer un écran vis-à-vis du verre, à l'air qui est soufflé lors de la trempe.

Pour obtenir cela, différents types de cadres ont été essayés, mais aucun n'a donné pleinement satisfaction ou n'a pu être utilisé dans un domaine un peu plus large que celui pour lequel il avait été strictement conçu (formes de courbures limitées, temps de contact verre/cadre limités n'autorisant pas de temps de bombage long pour des formes profondes ou complexes à donner au verre, ou n'autorisant pas de pressage, etc...).

Ainsi, il est classique d'enrober un cadre par un treillis métallique à mailles fines, par exemple en bronze; on obtient la porosité et la résistance mécanique souhaitées, mais la déformabilité du treillis n'est pas suffisante pour s'adapter parfaitement à certaines formes compliquées de cadres d'une part, et l'isolation thermique qu'apporte le treillis n'est pas suffisante pour autoriser des temps de contact verte/cadre trop longs.

Pour essayer d'augmenter cette isolation, on a remplacé le treillis métallique par du tissu de verte ou de céramique, mais un problème de durabilité, d'effritage du tissu se pose alors.

Ont alors été proposés des cadres métalliques perforés ou équipés de doigts saillants de faibles dimensions sur lesquels repose le verte, ou de rainures tracées dans l'épaisseur du métal du cadre, réservant ainsi sous le verte des passages pour l'air de trempe. En général, de tels cadres à doigts ou à rainures ou perforés peuvent fonctionner si le temps de contact verte/cadre est court ; mais si ce temps s'allonge en particulier à cause d'un pressage ou parce que les formes qu'on veut donner au verre sont complexes et exigent un temps de formage un peu plus long, on observe des casses de verre.

Dans le même ordre d'idée, la demande de brevet FR-A-2 597 089 propose à la place de treillis métalliques, une bande en métal perforée ayant une porosité à l'air d'au moins 40 % environ. Une telle bande perforée en métal est difficile à mettre en place, difficile à adapter parfaitement sur des cadres de forme complexe, sa porosité est trop faible si on veut lui conserver une tenue mécanique suffisante et l'isolation thermique qu'elle introduit n'est pas suffisante.

Par ailleurs, il est connu du brevet US-A-3 741 743 un revêtement métallique constitué d'un tissu formé de fils métalliques dont le diamètre est compris entre 72 et 152 microns ou de la superposition d'un premier filet - dit filet "lourd" - dont les fils ont un diamètre compris entre 254 et 762 micron, et d'un second filet dit filet "léger" dont les fils ont un diamètre compris entre 38 et 152 microns. Pour réaliser ce type de tissu, les fils sont utilisés tels quels, sous forme de monofils et ne sont pas rassemblés en mèches. De ce fait la conductivité du tissu est relativement importante et d'autre part, la porosité reste limitée et la souplesse faible.

La présente invention vise à fournir un recouvrement présentant des qualités de résistance mécanique, d'isolation thermique, de porosité à l'air, de tenue à la haute température, de déformabilité qui autorisent son utilisation en tant que recouvrement de moyens de contact support, transport du verte, notamment pendant son bombage et/ou sa trempe à l'air.

Elle propose pour cela un revêtement essentiellement métallique destiné à être intercalé entre des objets en verte chaud, notamment des plaques de verte portées à leur température de bombage et de trempe et leur support, notamment essentiellement métallique, ledit revêtement comportant un tissu métallique et étant caractérisé en ce que le tissu métallique est formé de mèches constituées d'une pluralité d'au moins environ 90 fils élémentaires d'un diamètre inférieur à 50 microns, organisées ensemble pour former des mailles présentant une conductivité thermique inférieure à 3 et de préférence inférieure à 0,2.WM⁻¹.K⁻¹.

Dans une première forme de réalisation, ce revêtement est un tissu essentiellement métallique formé de mèches d'une pluralité de fils élémentaires, les mèches disposées dans des directions différentes réalisant ensemble des mailles et interférant pour former des noeuds aux sommets des mailles grâce auxquels lesdites mailles sont indéformables.

Dans une seconde forme de réalisation, ce revêtement est constitué d'un tissu métallique lui-même et d'une couche céramique intermédiaire du type oxyde de Zirconium déposée sous le tissu métallique.

L'invention sera maintenant décrite plus en détail en référence aux figures jointes qui représentent :
* figure 1 : une vue schématique d'un tissu conforme à l'invention et correspondant à la première forme de réalisation,
* figure 2 : une vue schématique du tissu selon la figure 1 enrobant un cadre de bombage, trempe et/ou transport de plaques de verre.

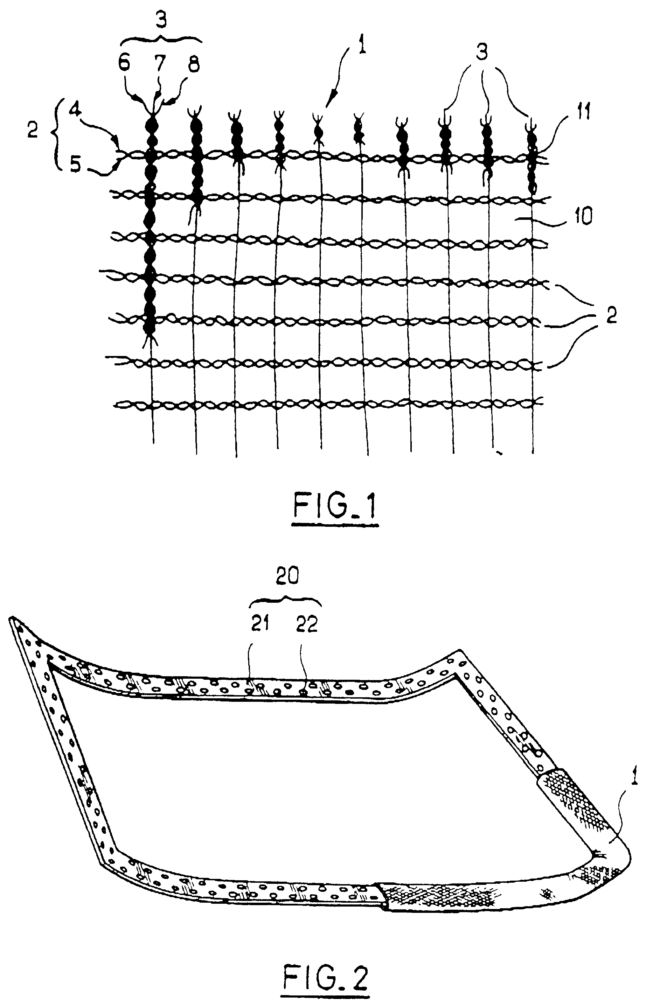

La figure 1 montre un exemple de tissu 1 présentant les caractéristiques nécessaires pour un cadre ou un enrobage de cadre de support de verte, intervenant au bombage, à la trempe à l'air et/ou lors du transport, à savoir :
- résistance aux hautes températures,
- résistance mécanique,
- isolation,
- porosité à l'air,
- déformabilité pour s'adapter à tous les profils des cadres.

Jusqu'à maintenant, l'expression cadre support ou moyen support du verte a été employé, ce qui laisse entendre que ce cadre ou ce moyen support est disposé sous le verte. En fait, l'invention est à étendre à tout cadre, ou moyen venant en contact avec le verre, que ce soit par le dessus ou le dessous et le mot support doit être pris dans ce sens plus général.

Ce tissu 1 est à base essentiellement de fils métalliques du type acier inoxydable réfractaire afin d'apporter, grâce au métal, une résistance mécanique et la tenue aux hautes températures.

Dans cette première forme de réalisation, l'isolation et la porosité à l'air sont apportés par la finesse des fils élémentaires du tissu et par leur mode d'assemblage.

Les fils élémentaires utilisés sont minces, d'un diamètre inférieur à 50 microns, notamment inférieur à 30 microns et de préférence inférieur à 15 microns, par exemple de l'ordre de 10 microns. Cette minceur des fils participe à la capacité du tissu de se déformer pour s'adapter au profil des cadres.

Une pluralité de ces fils au moins environ 90, est arrangée en mêches 2 et 3. A titre d'exemple non limitatif, la mêche 2 montrée horizontalement sur la figure 1 est constituée de plusieurs brins par exemple deux brins 4 et 5, chaque brin étant lui-même constitué d'un ou plusieurs ensembles de fils élémentaires, par exemple trois ensembles de 90 fils élémentaires chacun.

L'autre mêche 3 disposée verticalement sur la figure 1 est comme montré à titre d'exemple, formée de plusieurs brins par exemple trois brins 6, 7 et 8 eux-mêmes formés de plusieurs ensembles de fils élémentaires par exemple deux ensembles de 90 fils élémentaires. Cette autre mêche 3 est nouée sur toute sa longueur et interfère en particulier avec la mêche 2 disposée suivant une autre direction pour constituer des mailles 10 ayant à leurs sommets des noeuds 11 reliant la mêche 2 et la mêche 3.

Grâce à ces noeuds 11 à leurs sommets, les mailles 10 sont indéformables.

L'exemple de tissu montré figure 1 présente des mailles approximativement carré d'environ 5 mm de côté, et il possède une épaisseur d'environ 0,5 à 2 mm d'épaisseur.

Avantageusement pour accroître la résistance mécanique de ce tissu et en particulier l'indéformabilité de ses mailles, les brins 4, 5, 6, 7 et 8 n'appartiennent pas uniquement à une mêche 2 ou 3, mais au cours de leur longueur ils appartiennent successivement à une mêche puis à l'autre. Ils forment des séries de boucles adjacentes, recouvrant partiellement les boucles d'une autre série de boucles adjacentes disposées en regard de la prémière série et en sens opposé, toutes ces boucles étant nouées quatre par quatre ainsi qu'un brin supplémentaire par exemple vertical disposé entre les boucles adjacentes de chaque série, à l'aide d'un brin par exemple horizontal.

Ainsi chaque boucle participe sur une partie de sa longueur à la formation d'une mêche par exemple 3 puis à la formation d'une autre mêche par exemple 2 puis à la formation d'une mêche de type 3 voisine de la précédente.

D'autres modes de tissage sont également possibles.

La porosité à l'air d'un tel tissu est d'au moins environ 60 % et de préférence de l'ordre d'au moins 80 %. Les mailles peuvent être des quadrilatères par exemple des carrés, de côté pouvant aller de 2 à 10 mm.

D'autres formes sont également possible, fabriquées en particulier avec un nombre de mèches qui peut être supérieur à 2 ; la surface des mailles restant cependant toujours du même ordre, c'est-à-dire comprise entre approximativement 4 mm² et 1 cm².

Un tel tissu possède une conductivité thermique inférieure à 3 et de préférence inférieure à 0,2 W M⁻¹.K⁻¹, ce qui correspond à une résistance thermique comprise entre 10⁻³ et 50.10⁻³M².K.W⁻¹.

Un tel tissu est utilisé pour enrober notamment un cadre 20 de trempe et/ou bombage et/ou transport comme montré figure 2, ce cadre étant métallique ou essentiellement métallique.

Pour permettre à ce tissu 1 d'être traversé par l'air de trempe, il importe que l'air de trempe ne soit pas arrêté par le cadre 20 lui-même. Ce cadre 20 est alors ajouré, par exemple constitué d'un fer plat 21 percé d'orifices tels que 22 comme montré figure 2, ou constitué de manière équivalente, par exemple formé d'un profilé sur lequel sont fixés des doigts espacés destinés à porter le verre et entre lesquels peut circuler l'air, ou d'un profilé dans lequel sont tracées des stries ou rainures pour laisser passer l'air, ou d'un profilé à bord crénelé, ces différentes autres réalisations n'étant pas représentées.

Dans une autre forme de réalisation, le revêtement est constitué par un tissu identique à celui décrit précédemment et par une couche intermédiaire isolante, par exemple à base de céramique du type oxyde de Zirconium.

Cet oxyde de zirconium est par exemple déposé sur le support destiné à venir en contact avec le verre par pulvérisation de poudre dans une flamme, plasma ou équivalent.

Ce support étant revêtu de la couche intermédiaire isolante, il est recouvert d'un tissu essentiellement métallique. Avantageusement pour favoriser l'accrochage de la couche intermédiaire sur le cadre et améliorer sa tenue mécanique notamment à température élevée, une sous-couche à coefficient de dilatation intermédiaire entre celui du cadre et celui de la couche d'oxyde de zirconium est prévue, par exemple une sous-couche à base de Ni et de Cr.

Des cadres de trempe, bombage, transport de plaques de verre peuvent aussi être recouverts comme décrits dans cette seconde forme de réalisation.

Grâce à de tels revêtements, les cadres peuvent porter le verre tout au long de leurs multiples traitements thermiques si désiré, sans qu'il soit nécessaire d'effectuer des changements de cadre à chaque traitement.

De tels revêtements peuvent aussi être utilisés en tant que blindages électromagnétiques, comme matériaux de contact entre n'importe quel corps chaud et un support, comme gai ne de rouleaux destinés à transporter du verre chaud en plaques, comme tapis convoyeur ou comme recouvrement de tapis convoyeur destiné à porter des objets chauds en verre.

## Revendications

1. Revêtement essentiellement métallique destiné à être intercalé entre des objets en verre chauds, notamment des plaques de verte portées à leur température de bombage et de trempe, et leur support (20), notamment essentiellement métallique, comportant un tissu métallique, **caractérisé en ce que** ledit tissu métallique est formé de mèches constituées d'une pluralité d'au moins environ 90 fils élémentaires d'un diamètre inférieur à 50 microns organisées ensemble pour former des mailles et qu'il présente une conductivité thermique inférieure à 3WM⁻¹.K⁻¹.

2. Revêtement selon la revendication 1, **caractérisé en ce que** sa conductivité thermique est inférieure à 0,2 W m⁻¹ K⁻¹.

3. Revêtement selon l'une des revendications précédentes, **caractérisé en ce que** le diamètre des fils élémentaires est inférieur à 30 microns, de préférence inférieur à 15 microns, notamment de l'ordre de 10 microns.

4. Revêtement selon la revendication 1, **caractérisé en ce qu'**il présente une résistance thermique comprise entre 10⁻³ et 50.10⁻³ M² K W⁻¹.

5. Revêtement selon l'une des revendications précédentes, **caractérisé en ce que** les mèches, disposées dans des directions différentes réalisant ensemble des mailles (10), interférent pour former des noeuds (11) aux sommets des mailles grâce auxquels lesdites mailles sont indéformables.

6. Revêtement selon l'une des revendications précédentes, **caractérisé en ce que** le tissu (1) présente une épaisseur d'environ 0,5 à 2 mm d'épaisseur.

7. Revêtement selon l'une des revendications précédentes, **caractérisé en ce qu'**il possède une porosité à l'air d'au moins environ 60% et de préférence de l'ordre d'au moins 80%.

8. Revêtement selon l'une des revendications précédentes, **caractérisé en ce que** la surface des mailles (10) du tissu (1) est comprise entre environ 4 mm² et 1 cm².

9. Revêtement selon l'une des revendications précédentes, **caractérisé en ce que** les mailles (10) du tissu (1) ont la forme d'un quadrilatère notamment un carré de côté compris entre 2 et 10 mm.

10. Revêtement selon l'une des revendications précédentes, **caractérisé en ce que** les mèches sont formées de brins, notamment deux (4-5) ou trois (6-7-8), lesdits brins étant constitués par des ensembles, notamment deux ou trois, de fils élémentaires d'au moins environ 90 fils, plusieurs mèches notamment deux ayant des directions différentes, notamment perpendiculaires, étant tricotées, nouées, tressées et en général organisées ensemble pour former des mailles (10) indéformables.

11. Revêtement selon l'une des revendications précédentes, **caractérisé en ce que** la maille (10) du tissu (1) est carrée, en ce que deux mèches (2-3) orthogonales sont utilisées, chaque mèche utilisant deux brins (4-5) de trois ensembles constitués chacun de 90 fils élémentaires environ.

12. Revêtement selon la revendication 10 ou 11, **caractérisé en ce que** les brins (4-8) au cours de leur longueur appartiennent successivement à l'une puis à l'autre des différentes mèches organisées ensemble.

13. Revêtement selon l'une des revendications 10 à 12, **caractérisé en ce que** les brins (4-8) forment des séries de boucles adjacentes, recouvrant partiellement les bouches d'une autre série de boucles adjacentes disposées en regard de la première série et en sens opposé, toutes ces boucles étant nouées quatre par quatre ainsi qu'un brin supplémentaire disposé entre les boucles adjacentes de chaque série, à l'aide d'un brin disposé dans la direction orthogonale à celle du brin supplémentaire.

14. Revêtement selon l'une des revendications précédentes, **caractérisé en ce qu'**il est constitué d'un tissu (1) essentiellement métallique et d'une couche intermédiaire isolante.

15. Revêtement selon la revendication 14, **caractérisé en ce que** la couche intermédiaire est une couche céramique du type oxyde de zirconium.

16. Revêtement selon la revendication 14 ou 15, **caractérisé en ce qu'**une sous-couche à coefficient de dilatation intermédiaire entre celui du cadre (20) et celui de la couche intermédiaire est prévue.

17. Revêtement selon la revendication 16, **caractérisé en ce que** la sous-couche est à base de Ni et de Cr.

18. Application du revêtement selon l'une des revendications précédentes au recouvrement de cadres (20) de support de plaques de verre au cours de leur bombage et/ou de leur trempe à l'air et/ou de leur transport.

19. Application selon la revendication 16, **caractérisée en ce que** les cadres (20) sont ajourés.

20. Application du revêtement selon l'une des revendications 1 à 15 pour supporter du verre chaud, notamment plaques dans des réalisations appartenant au groupe suivant : gaines de rouleaux transporteurs, tapis convoyeur, recouvrement de tapis convoyeur.

21. Application du revêtement selon l'une des revendications 1 à 15 en tant qu'élément de blindage.

## Claims

1. Essentially metallic covering intended to be inserted between hot glass articles, notably glass plates raised to their bending and toughening temperature, and their support (20), notably essentially metallic support, the covering comprising a metallic fabric, characterized in that said metallic fabric is formed of rovings constituted of a plurality of at least approximately 90 elementary threads of a diameter less than 50 microns, organized together to form stitches, and that it has a thermal conductivity less than 3 Wm⁻¹K⁻¹.

2. Covering according to Claim 1, characterized in that its thermal conductivity is less than 0.2 Wm⁻¹K⁻¹.

3. Covering according to one of the preceding Claims, characterized in that the diameter of the elementary threads is less than 30 microns, preferably less than 15 microns, notably of the order of 10 microns.

4. Covering according to Claim 1, characterized in that it has a thermal resistance lying between 10⁻³ and 50 x 10⁻³ m²KW⁻¹.

5. Covering according to one of the preceding Claims, characterized in that the rovings, disposed in different directions and together forming stitches (10), interfere to form knots (11) at the tops of the stitches, by means of which said stitches are indeformable.

6. Covering according to one of the preceding Claims, characterized in that the fabric (1) has a thickness of approximately 0.5 to 2 mm.

7. Covering according to one of the preceding Claims, characterized in that it has a porosity to air of at least approximately 60% and preferably of the order of at least 80%.

8. Covering according to one of the preceding Claims, characterized in that the area of the stitches (10) of the fabric (1) lies between approximately 4 mm² and 1 cm².

9. Covering according to one of the preceding Claims, characterized in that the stitches (10) of the fabric (1) have the form of a quadrilateral, notably a square, of side dimension from 2 to 10 mm.

10. Covering according to one of the preceding Claims, characterized in that the rovings are formed of strands, notably two (4-5) or three (6-7-8) strands, said strands being constituted of assemblies, notably two or three assemblies, of elementary threads of at least approximately 90 threads, several rovings, notably two rovings, having different, notably perpendicular directions, being knitted, knotted, braided and in general organized together to form indeformable stitches (10).

11. Covering according to one of the preceding Claims, characterized in that the stitch (10) of the fabric (1) is square, and in that two mutually perpendicular rovings (2-3) are used, each roving using two strands (4-5) of three assemblies, each constituted of approximately 90 elementary threads.

12. Covering according to Claim 10 or 11, characterized in that the strands (4-8), in the course of their length, belong in succession to first one then another of the different rovings organized together.

13. Covering according to one of Claims 10 to 12, characterized in that the strands (4-8) form series of adjacent loops, partly overlapping the mouths of another series of adjacent loops disposed opposite the first series and in the opposite sense, all these loops being knotted four-by-four as well as a supplementary strand disposed between the adjacent loops of each series, by means of a strand disposed in the direction perpendicular to that of the supplementary strand.

14. Covering according to one of the preceding Claims, characterized in that it is constituted of an essentially metallic fabric (1) and of an insulating intermediate layer.

15. Covering according to Claim 14, characterized in that the intermediate layer is a ceramic layer of the zirconium oxide type.

16. Covering according to Claim 14 or 15, characterized in that an under-layer having a coefficient of expansion intermediate between that of the frame (20) and that of the intermediate layer is provided.

17. Covering according to Claim 16, characterized in that the under-layer is based upon Ni and Cr.

18. Application of the covering according to one of the preceding Claims to the covering of support frames (20) for glass plates during their bending and/or air toughening and/or their conveying.

19. Application according to Claim 18, characterized in that the frames (20) are perforated.

20. Application of the covering according to one of Claims 1 to 15 for supporting hot glass, notably plates in realizations forming part of the following group: sheaths or facings for conveyor rollers, conveyor belt, covering for conveyor belt.

21. Application of the covering according to one of Claims 1 to 15 as element of armour.

## Patentansprüche

1. Überzug, das im wesentlichen metallisches ist, zur Einfügung zwischen Gegenstanden aus erhitztem Glas, insbesondere Glasplatten, die auf ihre Biege- und Vorspanntemperatur gebracht wurden, und deren Tragvorrichtung (20), die insbesondere im wesentlichen aus Metall besteht, wobei die Überzug ein im wesentlichen metallisches Gewebe aufweist, **dadurch gekennzeichnet**, daß das metallische Gewebe aus Faserbündeln besteht, die aus jeweils mindestens ungefähr 90 Elementarfasern mit einem kleineren Durchmesser als 50 Mikrometer gebildet sind, um zusammen Maschen zu bilden, und daß eine thermische Leitfähigkeit von weniger als 3 W.m⁻¹.K⁻¹ aufweist.

2. Überzug, nach Anspruch 1, **dadurch gekennzeichnet**, daß eine thermische Leitfähigkeit kleiner als 0,2 W.m⁻¹.K⁻¹ ist.

3. Überzug nach einem der vorhergehenden Ansprüche, **dadurch gekennzeichnet**, daß das Durchmesser der Elementarfasern kleiner als 30 Mikrometer und vorzugsweise kleiner als 15 Mikrometer ist, und insbesondere in der Größenordnung von 10 Mikrometer liegt.

4. Überzug, nach Ansprüche 1, **dadurch gekennzeichnet**, daß dieser einen Wärmewiderstand zwischen 10⁻³ und 50.10⁻³ M².K.W.⁻¹ aufweist.

5. Überzug, nach einem der vorhergehenden Ansprüche, **dadurch gekennzeichnet**, daß die Faserbündel in verschiedenen Richtungen angeordnet sind, gemeinsam Maschen (10) bilden, zusammenlaufen um an den Schnittpunkten der Fäden Knoten (11) zu bilden, dank derer die Maschen formbeständig sind.

6. Überzug, nach einem der vorhergehenden Ansprüche, **dadurch gekennzeichnet**, daß das Gewebe (1) eine Dicke von ungefähr 0,5 bis 2 mm augweist.

7. Überzug, nach einem der vorhergehenden Ansprüche, **dadurch gekennzeichnet**, daß er eine Luftdurchlässigkeit von mindestens ungefähr 60% und vorzugsweise in der Größenordnung von mindestens 80% aufweist.

8. Überzug, nach einem der vorhergehenden Ansprüche, **dadurch gekennzeichnet**, daß die Oberfläche der Maschen (10) der Gewebe (1) ungefähr 4 mm² bis 1 cm² beträgt.

9. Überzug, nach einem der vorhergehenden Ansprüche, **dadurch gekennzeichnet**, daß die Maschen (10) der Gewebe (1) Form eines Vierecks, insbesondere eines Rechtecks mit einer Seitenlänge zwischen 2 und 10 mm haben.

10. Überzug, nach einem der vorhergehenden Ansprüche, **dadurch gekennzeichnet**, daß die Faserbündel aus Fäden gebildet sind, insbesondre zwei (4-5) oder drei (6, 7, 8), wobei die Fäden aus mindestens ungefähr 90 Elementarfasern besteht und welche Faserbündel, insbesondere zwei, verschiedenen Ausrichtungen haben, insbesondere senkrecht zueinander, und gewirkt, verknüpft, geflochten und allgemein miteinander verbunden sind, um formbeständige Maschen (10) zu bilden.

11. Überzug, nach einem der vorhergehenden Ansprüche, **dadurch gekennzeichnet**, daß die Maschen (10) des Gewebes (1) rechteckig ist, und daß zwei senkrechte Faserbündel (2-3) verwendet werden, die jeweils aus ungefähr 90 Elementarfasern besteht.

12. Überzug, nach Ansprüche 10 oder 11, **dadurch gekennzeichnet**, daß die Fäden (4-8) im Verlauf ihrer Länge nacheinander zu einem und dann zu einem anderen der verschiedenen Faserbündel gehören, die miteinander verbunden sind.

13. Überzug, nach einem der Ansprüche 10 bis 12, **dadurch gekennzeichnet**, daß die Fäden (4-8) Reihen von nebeneinanderliegenden Schlingen bilden, die teilweise die Schlingen einer anderen Reihe von nebeneinanderliegenden Schlingen überdecken, welche gegenüber und in entgegengesetztem Sinn zur ersten Reihe angeordnet sind, wobei alle Schlingen jeweils zu viert verknüpft sind, ebenso wie ein zusätzliches Faserbündel, das wischen den nebeneinanderliegenden Schlingen jeder Reihe angeordnet ist, und zwar mit Hilfe eines senkrecht zum zusätzliches Faserbündels angeordneten Faserbündels.

14. Überzug, nach einem vorhergehenden Ansprüche, **dadurch gekennzeichnet**, daß er aus einem im wesentlichen metallischen Gewebe (1) und aus einer isolierenden Zwischenschicht gebildet ist.

15. Überzug, nach Ansprüche 14, **dadurch gekennzeichnet**, daß die Zwischenschicht eine keramische Schicht vom typ Zirkoniumoxid ist.

16. Überzug, nach Ansprüche 14 oder 15, **dadurch gekennzeichnet**, daß eine untere Schicht vorgesehen ist, deren Ausdehnungskoeffizient zwischen dem des Rahmens (20) und dem der Zwischenschicht liegt.

17. Überzug, nach Anspruch 16, **dadurch gekennzeichnet**, daß die untere Schitch auf der Basis von Cr and Ni gefertigt ist.

18. Verwendung des Überzugs nach einem der vorhergehenden Ansprüche zur Abkeckung von Tragrahmen (20) für Glasscheiben in Verlauf ihrer Biegung und/oder ihrer Vorspannung mit Luft und/oder ihres Transportes.

19. Verwendung nach Anspruch 18, **dadurch gekennzeichnet**, daß die Rahmen (20) durchbrochen sind.

20. Verwendung des Überzugs nach einem der Ansprüche 1 bis 17 zum Tragen von erhitztem Glas, insbesondere bei den Ausführungsformen den nach folgenden Gruppe: Umhüllungen von Transportrollen, Förderbänder, Abeckungen von Förderbändern.

21. Verwendung des Überzugs nach einem der Ansprüche 1 bis 17 als Schutzelement.
